# EUROPÄISCHE PATENTSCHRIFT

(11) **EP 0 990 542 B1**
(45) Veröffentlichungstag und Bekanntmachung des Hinweises auf die Patenterteilung: **12.01.2005**
(21) Anmeldenummer: 99118491.2
(22) Anmeldetag: 18.09.1999
(51) Int. Cl.: B60H 1/34

(54) **Zungenverbindung**
Tongue fastener
Fermeture à languette

(30) Priorität: 29.09.1998 DE 19844525
(43) Veröffentlichungstag der Anmeldung: 05.04.2000
(73) Patentinhaber: Siemens Aktiengesellschaft, 80333 München (DE); smart gmbh, 71032 Böblingen (DE)
(72) Erfinder: Steinmetz, Hermann-Josef, 71034 Böblingen (DE); Krzystetzko, Heinz, 64390 Erzhausen (DE)

(56) Entgegenhaltungen:
- US-A- 5 014 964
- PATENT ABSTRACTS OF JAPAN vol. 1998, no. 05, 30. April 1998 (1998-04-30) & JP 10 016546 A (NIPPON PLAST CO LTD), 20. Januar 1998 (1998-01-20)
- PATENT ABSTRACTS OF JAPAN vol. 013, no. 055 (M-795), 8. Februar 1989 (1989-02-08) & JP 63 259346 A (NIPPON PLAST CO LTD), 26. Oktober 1988 (1988-10-26)
- PATENT ABSTRACTS OF JAPAN vol. 1999, no. 10, 31. August 1999 (1999-08-31) & JP 11 132546 A (AICHI MACH IND CO LTD), 21. Mai 1999 (1999-05-21)

## Beschreibung

Die Erfindung betrifft eine Zungenverbindung nach dem Oberbegriff des Patentanspruchs 1.

Eine solche Zungenverbindung ist aus der EP 0 271 706 B1 bekannt und betrifft eine Düse für die Belüftung von Fensterscheiben. Dort ist ein etwa kastenförmiger Düsenrahmen gezeigt, an dem vier Rastzungen einstückig angeformt sind. Mit diesen Rastzungen kann der Düsenrahmen in Durchbrechungen eines entsprechenden Karosserieteiles festgelegt werden, wobei die Rastzungen einen Öffnungsrad der Wand hintergreifen und eine Bewegung des Düsenrahmens in Richtung senkrecht zu einer Öffnungsebene verhindern.

Eine weitere gattungsgemäße Zungenverbindung ist der DE 40 16 026 C2 entnehmbar, die eine Belüftungseinrichtung für den Innenraum eines Fahrzeuges betrifft. Dort ist ein Gehäuse dargestellt, an dessen als Flansch ausgebildeter Vorderseite Klipselemente angeordnet sind, die dazu dienen, die gesamte Lüfterdüse in einer Aussparung einer Wandung durch eine Klipsmontage zu befestigen. Auch diese Klipselemente hintergreifen einen Öffnungsrad der Wandung und sorgen damit für eine Festlegung des Gehäuses in senkrechter Richtung zu einer Öffnungsebene der Aussparung.

Aufgabe der Erfindung ist es, eine Zungenverbindung der im Oberbegriff des Patentanspruchs 1 angegebenen Art zu schaffen, die eine verbesserte Fixierung eines Grundkörpers an einem Öffnungsrand einer Wandöffnung ermöglicht.

Diese Aufgabe wird erfindungsgemäß durch eine Zungenverbindung mit den Merkmalen des Patentanspruchs 1 gelöst.

Bei der Zungenverbindung nach der Erfindung ist an mindestens einer Zunge ein in Richtung des Öffnungsrandes nach außen abragender (radialer) Vorsprung vorgesehen, der bei der Montage des Grundkörpers an der Wand in den Öffnungsrand einfurcht und durch die Herstellung eines Formschlusses zum Öffnungsrand eine Bewegung des Grundkörpers in der Öffnungsebene verhindert. Damit kann die Zunge auf einfache Weise neben der Aufgabe der Begrenzung der Bewegung des Grundkörpers in Richtung der Öffnungsebene zusätzlich die Aufgabe der Festlegung des Grundkörpers in Richtung der Öffnungsebene übernehmen, ohne daß ein separates Bauteil erforderlich wird. Beispielsweise kann damit ein rotationssymmetrischer Grundkörper gegen eine Drehbewegung innerhalb einer an diesen angepaßten Wandöffnung gesichert werden. Auch wäre es denkbar, einen rechteckigen oder mehreckigen Grundkörper beispielsweise gegen eine lineare Bewegung innerhalb einer langgestreckten Schlitzöffnung in einer bestimmten Position zu sichern.

Ein weiterer Vorteil besteht darin, daß die formschlüssige Verbindung auf einfache Weise, z.B. durch ein Beaufschlagen des Grundkörpers mit einer Kraft in Richtung etwa senkrecht zu der Öffnungsebene herstellbar ist, wobei der Grundkörper auch nachträglich leicht demontierbar ist.

Vorteilhafte Ausführungsformen der erfindungsgemäßen Zungenverbindung mit zweckmäßigen Weiterbildungen der Erfindung sind in den Unteransprüchen angegeben.

So hat es sich als besonders günstig erwiesen, wenn die Zunge mit dem Öffnungsrand radial verspannbar ist, wodurch der Grundkörper durch die Zunge zusätzlich zu dessen Festlegung in Richtung der Öffnungsebene auch in etwa senkrechter Richtung zur Öffnungsebene fixiert werden kann.

Diese zusätzliche Festlegung des Grundkörpers kann auch dadurch erreicht werden, daß mindestens eine Zunge eine zusätzliche Rastnase aufweist, durch die der Grundkörper in etwa senkrechter Richtung zur Öffnungsebene an der Wand fixierbar ist.

Ist der Grundkörper ringförmig ausgebildet und sind an ihm vier um jeweils etwa 90° zueinander versetzte Zungen angeformt, so kann der Grundkörper besonders fest in einer kreisförmig ausgebildeten Wandöffnung in Richtung der Öffnungsebene lagegesichert und verdrehgesichert werden. Wenn dabei alle vier Zungen jeweils einen radialen Vorsprung aufweisen, ergibt sich eine besonders stabile Sicherung gegen eine Verdrehung innerhalb der kreisförmigen Wandöffnung.

Auch hat es sich in weiterer Ausgestaltung der Erfindung als besonders günstig erwiesen, wenn der sich vertikal erstreckende radiale Vorsprung zumindest abschnittsweise schneidenartig ausgebildet ist, wodurch ein leichtes Einfurchen des Vorsprungs in den Öffnungsrand ermöglicht wird. Das Einfurchen funktioniert insbesondere dann besonders gut, wenn das Material des Öffnungsrandes weicher als das des Vorsprungs ist.

Das Einfurchen kann zudem dadurch verbessert werden, daß der Schneidabschnitt des jeweiligen radialen Vorsprungs feilenzahn- oder sägezahnartig ausgebildet ist, wodurch eine Materialabtragung an dem Öffnungsrand auf einfache Weise erfolgen kann.

Besonders vorteilhaft ist es, die vier Zungen federnd auszubilden und mit jeweils einer einen darüberliegenden oberen Abschnitt radial überragenden Rastnase zu versehen, wodurch sich eine besonders haltbare Festlegung des Grundkörpers in senkrechter Richtung zur Öffnungsebene erzielen läßt. Ein weiterer Vorteil dieser Ausgestaltung besteht darin, daß sich der radiale Vorsprung bei der Montage nicht nur in etwa vertikaler Richtung zu der Öffnungsebene durch eine Montagekraft, sondern auch in horizontaler Richtung durch die Federkraft der Zunge in den Öffnungsrand der Wand einfurchen kann.

Ist dabei an die vier federnden Zungen jeweils eine in Richtung der Mittelachse des ringförmigen Grundkörpers nach innen gerichtete Montagelasche angeformt, so ist der Grundkörper einerseits leicht auf der Wandöffnung zentrierbar und durch relativ geringe Kraftbeaufschlagung des Grundkörpers in Richtung der Wandöffnung leicht montierbar.

Schließlich hat es sich als besonders vorteilhaft gezeigt, eine Luftdüse mit einem ringförmigen Grundkörper, einem verdrehbaren Drehsockel und mit einer Kugeldüse mit Hilfe der Zungenverbindung in der Wandöffnung anzuordnen, wobei die Luftdüse besonders leicht montierbar ist und eine ansprechende und zweckmäßige Ausgestaltung aufweist.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine Seitenansicht einer Luftdüse mit einem Grundkörper und von diesem abragenden Zungen einer erfindungsgemäßen Zungenverbindung;
- Fig. 2: eine vergrößerte Darstellung einer der abragenden Zungen der erfindungsgemäßen Zungenverbindung nach dem Detail II in Fig.1;
- Fig. 3: eine seitliche Schnittansicht der abragenden Zunge der erfindungsgemäßen Zungenverbindung entlang der Schnittlinie III-III in Fig.2;
- Fig. 4: eine Schnittansicht einer Wand mit einer verkleinert dargestellten Wandöffnung, an deren Unterseite vier durch die Zungen eingebrachte Furchen erkennbar sind;
- Fig. 5: eine Unteransicht der Wandöffnung mit den Furchen gemäß Fig.4;
- Fig. 6: eine Schnittansicht einer weiteren Wand mit einer verkleinert dargestellten Wandöffnung, an deren Unterseite die durch die Zungen eingebrachte Furchen erkennbar sind.

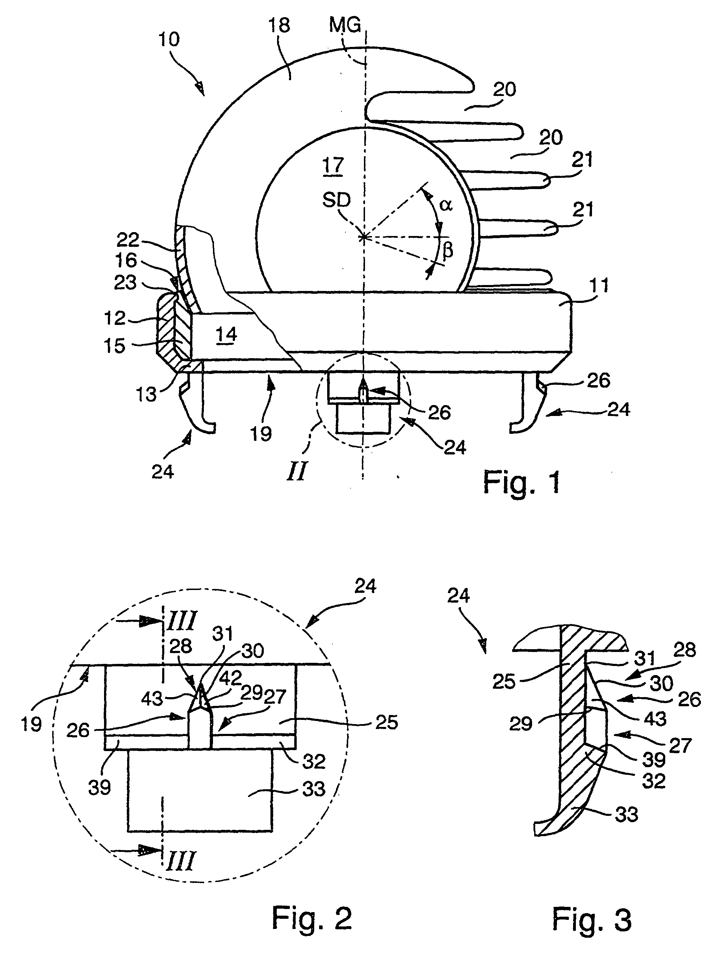

Fig.1 zeigt eine Luftdüse 10, die einen ringförmigen Grundkörper 11 mit einer Mittelachse MG aufweist. Der ringförmige Grundkörper 11 ist links einer Bruchlinie aufgeschnitten dargestellt und hat - wie in dem Ausbruch erkennbar - einen etwa L-förmigen Querschnitt mit einem Seitenabschnitt 12 und einem Grundabschnitt 13. In dem Grundkörper 11 ist ein um die Mittelachse MG verdrehbarer Drehsockel 14 aufgenommen, der mit einem Sockelring 15 im Bereich des Seitenabschnitts 12 und des Grundabschnitts 13 an den Grundkörper 11 angepaßt ist. Dabei ist der Drehsockel 14 mittels einer nicht gezeigten Rasteinrichtung oder durch Rastzähne in Raststufen gegenüber dem Grundkörper 11 einstellbar. Der Grundkörper 11 kann - wie hier gezeigt - einen umlaufenden Vorsprung 23 aufweisen, mit dem der Drehsockel 14 axial gesichert in dem Grundkörper 11 aufgenommen ist. An einer oberen Stirnfläche 16 des Sockelrings 15 sind zwei in Richtung nach oben abragende Sockelohren 17 angeformt, die im wesentlichen kreissegmentförmig ausgebildet sind. Durch die beiden Sockelohren 17, die bezogen auf die Mittelachse MG diametral angeordnet sind, ist eine Kugeldüse 18 um eine Schwenkachse SD verschwenkbar aufgenommen. Die Schwenkachse SD verläuft vorzugsweise zentral der Sockelohren 17 und etwa normal zu der Mittelachse MG sowie parallel zu einer Grundfläche 19 des Grundkörpers 11. Zwischen den Sockelohren 17 und der Kugeldüse 18 sind nicht dargestellte Rasteinrichtungen oder Rastzähne vorgesehen, mit der die Kugeldüse 18 aus der gezeigten mittleren Stellung in Raststufen um einen Winkel α von etwa 40° nach oben und um einen Winkel β von etwa 25° nach unten verschwenkt werden kann. Die Kugeldüse 18 ist etwa kugelsegmentförmig ausgebildet und weist Luftaustrittsöffnungen 20 auf, die sich etwa zwischen den Sockelohren 17 erstrecken und jeweils von an einer Mantelwand 22 der Kugeldüse 18 befestigten Leitwänden 21 nach oben und unten begrenzt werden, die zum gerichteten Verteilen der in die Fahrgastzelle austretenden Luft vorgesehen sind, wobei zum Einlassen der Luft die Kugeldüse 18 an ihrem unteren Ende offen ausgebildet ist. Die Leitwände 21 sind in ihrer Form an die Außenkontur der Kugeldüse 18 angepaßt, so daß diese einen insgesamt kugelförmigen Gesamteindruck vermittelt. An der Grundfläche 19 des ringförmigen Grundkörpers 11 sind vier von diesem nach unten abragende Zungen 24 angeformt, die jeweils um 90° zueinander versetzt angeformt sind und bezogen auf die Mittelachse MG den jeweils gleichen radialen Abstand haben.

In den Fig.2 und 3 ist eine der abragenden Zungen 24 nach dem Detail II in Fig.1 in Vorderansicht (Fig.2) bzw. in einer seitlichen Schnittansicht (Fig.3) entlang der Schnittlinie II-II in Fig.2 dargestellt. Die Zunge 24 ist an dem Grundabschnitt 13 des Grundkörpers 11 mit einem oberen Abschnitt 25 angeformt, der einen nach außen abragenden radialen Vorsprung 26 aufweist. Der radiale Vorsprung 26 verläuft vertikal und besteht aus einem unteren Stegabschnitt 27 und einem oberhalb diesem angeordneten Schneidabschnitt 28. Der Stegabschnitt 27 weist über seine gesamte Höhe eine gleichbleibende Breite und Dicke auf und geht an einer Übergangskante 29 in den Schneidabschnitt 28 über. Der Schneidabschnitt 28 weist eine Schneidkante 30 auf, die sich von der Übergangskante 29 bis zu einer oberen Spitze 31 des radialen Vorsprungs 26 erstreckt, wobei sich der Schneidabschnitt 28 ausgehend von der Übergangskante 29 sowohl in Breite und Dicke verjüngt und in Richtung der oberen Spitze 31 spitz zuläuft. Dadurch bilden sich im Bereich des Schneidabschnitts 28 eine linke und eine rechte, etwa dreieckförmige Schneidfläche 42,43, die hier glatt ausgebildet sind. Allerdings wäre es auch denkbar, die Schneidflächen 42,43 mit Feilenzähnen zu versehen, um eine einfachere Einfurchung des radialen Vorsprungs 26 zu ermöglichen. Zur Verbesserung der Schneidwirkung kann auch die Schneidkante 30 mit Sägezähnen versehen sein.

An dem unteren Ende des oberen Abschnitts 25 umfaßt die Zunge 24 eine Rastnase 32, die den oberen Abschnitt 25 radial nach außen überragt. Die Rastnase 32 schließt außen etwa bündig mit dem Stegabschnitt 27 des radialen Vorsprungs 26 ab und weist eine nach außen und unten geneigte Rastfläche 39 auf.

Das untere Ende der Zunge 24 bildet eine Montagelasche 33, die mit dem oberen Abschnitt 25 und der Rastnase 32 einstückig ausgebildet ist. Die Montagelasche 33 ist in ihrer Breite gegenüber dem oberen Abschnitt 25 etwas reduziert und - wie in Fig.3 erkennbar - nach innen in Richtung der Drehachse MG des Grundkörpers 11 gebogen gerichtet.

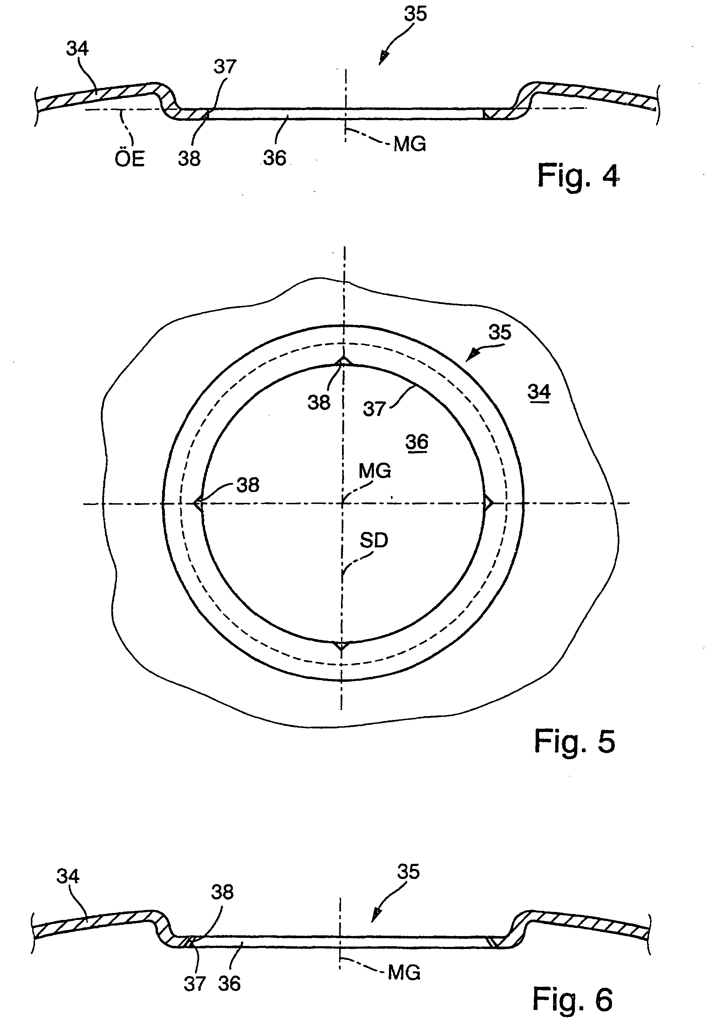

In Fig.4 ist in Schnittansicht eine Wand 34 mit einer etwas vertieft liegenden Sicke 35 dargestellt, in der die Wand 34 von einer Wandöffnung 36 durchsetzt ist. Die Wandöffnung 36 ist kreisförmig ausgebildet und in ihrem Durchmesser etwa den äußeren Seiten der oberen Abschnitte 25 der Zungen 24 angepaßt. Die Wandöffnung 36 ist etwa senkrecht in die Wand 34 eingebracht, wobei sich ein Öffnungsrand 37 der Wandöffnung 36 ebenfalls etwa senkrecht zu der Wand 34 erstreckt. An der Oberseite der Wand 34 erstreckt sich in der Sicke 35 eine Öffnungsebene ÖE, auf der die Grundfläche 19 des Grundkörpers 11 beim Einbau der Luftdüse 10 zu liegen kommt.

An der Unterseite der Wand 34 sind in dem Öffnungsrand 37 - wie auch in Fig.5 ersichtlich - vier um jeweils etwa 90° zueinander versetzte Furchen 38 erkennbar, die von den radialen Vorsprüngen der montierten und anschließend wieder entfernten Luftdüse 11 in den Öffnungsrand 37 eingefurcht worden sind. Die Furchen 38 entsprechen daher in ihrer Form dem Schneidabschnitt 28 der Zungen 24 und sind - wie in Fig.4 erkennbar - in ihrem Längsschnitt etwa dreieckförmig an der Unterseite des Öffnungsrandes 37 eingefurcht. Fig.4 zeigt, daß auch der Querschnitt der Furchen 35 etwa dreieckförmig ist.

Der in Fig.6 dargestellte Öffnungsrand 37 erweitert sich in Richtung der Unterseite der Wand 34 nach außen, so daß die durch die Schneidabschnitte 28 der Zungen 24 in den Öffnungsrand 37 eingebrachten Furchen 38 etwa über die gesamte Höhe des Öffnungsrandes 37 etwa parallel zu diesem verlaufen. Der Querschnitt der Furchen 35 etwa wiederum etwa dreieckförmig ausgebildet.

Die Montage der Luftdüse geschieht folgendermaßen:

Da die Wandöffnung 36 in ihrem Durchmesser etwa dem Durchmesser der Zungen 24 an der Außenseite ihres oberen Abschnittes 25 entspricht, kann die Luftdüse 10 mit den nach innen gerichteten Montagelaschen 33 der Zungen 24 an der Oberseite der Wandöffnung 36 durch Auflegen zentriert werden. Wird nun die Luftdüse 10 mit vertikaler Kraft in Richtung gegen die Wand 34 beaufschlagt, so gleiten die federnd ausgebildeten Zungen 24 an der Oberseite des Öffnungsrandes 37 der Wandöffnung 36 entlang nach unten, wobei sich die federnden Zungen 24 nach innen gegen die Mittelachse MG des Grundkörpers 11 bewegen. Nachdem die Zungen 24 nach weiterer Bewegung der Luftdüse 10 in Richtung nach unten mit den Rastflächen 39 und den Stegabschnitten 27 der radialen Vorsprünge 26 das untere Ende des Öffnungsrandes 37 passiert haben, werden die federnden Zungen 24 wieder nach außen bewegt und verrasten in ihrer Einbaustellung, wodurch eine Festlegung des Grundkörpers 11 senkrecht zu der Öffnungsebene ÖE erzielt wird. Dabei kommt die Grundfläche 19 des Grundkörpers 11 auf der Oberfläche der Wand 34, die durch die Öffnungsebene ÖE bestimmt ist, bündig zu liegen. Durch die Bewegung der Zungen 24 in Richtung nach unten und außen furchen sich die radialen Vorsprünge 26 mit ihrem Schneidabschnitt 18 in den Öffnungsrand 37 der Wandöffnung 36 ein, so daß der Grundkörper 11 durch einen Formschluß zwischen den radialen Vorsprüngen 26 und den Furchen 38 drehgesichert und radial verspannt festgelegt ist. In dem hier gezeigten Ausführungsbeispiel furchen die radialen Vorsprünge 26 sowohl in etwa vertikaler Richtung zu der Öffnungsebene ÖE durch eine Montagekraft als auch in horizontaler Richtung durch die Federkraft der Zunge 24 in den Öffnungsrand 37 der Wand 34 ein. Somit ist es möglich, die Furchen 38 - wie in Fig.4 - nur an der Unterseite des Öffnungsrandes 37 - oder wie in Fig.6 - parallel zu einem schrägen Öffnungsrand 37 durch die radialen Vorsprünge 26 einzufurchen. Gleichfalls wäre es sowohl denkbar, daß sich die radialen Vorsprünge 26 nur durch eine Montagekraft in etwa vertikaler Richtung zu der Öffnungsebene ÖE vertikal in den Öffnungsrand 37 der Wand 34 einfurchen, als auch nur in horizontaler Richtung durch die Federkraft der Zunge 24 in den Öffnungsrand 37 zu prägen. Um eine Einfurchung der Furchen 38 in den Öffnungsrand 37 der Wand 34 zu ermöglichen, können die Zungen 24 auch aus einem entsprechend härteren Material als die Wand 34 hergestellt werden. Ein einteilig mit den Zungen 24 ausgebildeter Grundkörpers 11 muß zusätzlich aus einem die federnden Eigenschaften der Zungen 24 gewährleistenden Material, beispielsweise aus einem spröderen Polypropylen gebildet sein. Als Grundmaterial für die Wand 34 ist in dieser Kombination beispielsweise ein schlagzähes Polypropylen geeignet.

## Patentansprüche

1. Zungenverbindung, insbesondere zur Fixierung einer Luftdüse (10) an einer Wand (34) in einer Fahrgastzelle, an einem Grundkörper (11), der mit wenigstens zwei von diesem abragenden Zungen (24) an einem Öffnungsrand (37) einer Wandöffnung (36) lösbar anzuordnen ist, wobei die Zungen (24) entlang des Öffnungsrandes (37) in die Wandöffnung (36) eingreifen und eine Bewegung des Grundkörpers (11) in Richtung der Öffnungsebene (ÖE) begrenzen, **dadurch gekennzeichnet, daß** an mindestens einer Zunge (24) ein in Richtung des Öffnungsrandes (37) nach außen abragender (radialer) Vorsprung (26) vorgesehen ist, der bei der Montage des Grundkörpers (11) an der Wand (34) in den Öffnungsrand (37) einfurcht und durch die Herstellung eines Formschlusses zum Öffnungsrand (37) eine Bewegung des Grundkörpers (11) in der Öffnungsebene (ÖE) verhindert.

2. Zungenverbindung nach Anspruch 1, **dadurch gekennzeichnet, daß** die Zunge (24) mit dem radialen Vorsprung (26) derart ausgebildet ist, daß dieser mit dem Öffnungsrand (37) radial verspannbar ist und den Grundkörper (11) in etwa senkrechter Richtung zur Öffnungsebene (ÖE) fixiert.

3. Zungenverbindung nach Anspruch 1, **dadurch gekennzeichnet, daß** mindestens eine Zunge (24) eine zusätzliche Rastnase (32) aufweist, durch die der Grundkörper (11) in etwa senkrechter Richtung zur Öffnungsebene (ÖE) an der Wand (34) fixierbar ist.

4. Zungenverbindung nach Anspruch 1, **dadurch gekennzeichnet, daß** der Grundkörper (11) ringförmig ausgebildet ist, und an diesem vier um jeweils etwa 90° zueinander versetzte Zungen (24) angeformt und im Querschnitt außen an eine kreisförmig ausgebildete Wandöffnung (36) angepaßt sind.

5. Zungenverbindung nach Anspruch 4, **dadurch gekennzeichnet, daß** die vier Zungen (24) jeweils einen radialen Vorsprung (24) aufweisen, durch die der Grundkörper (11) gegen eine Drehbewegung innerhalb der kreisförmigen Wandöffnung (36) festgelegt ist.

6. Zungenverbindung nach Anspruch 5, **dadurch gekennzeichnet, daß** die radialen Vorsprünge (26) vertikal verlaufend zwischen der jeweiligen Rastnase (32) und dem Grundkörper (11) an einem oberen Abschnitt (25) der Zunge (24) angeformt und zumindest abschnittsweise schneidenartig ausgebildet sind.

7. Zungenverbindung nach Anspruch 6, **dadurch gekennzeichnet, daß** der Schneidabschnitt (28) des jeweiligen radialen Vorsprungs (26) feilenzahn- oder sägezahnartig ausgebildet ist.

8. Zungenverbindung nach Anspruch 4, **dadurch gekennzeichnet, daß** die vier Zungen (24) federnd ausgebildet sind und jeweils eine einen darüberliegenden oberen Abschnitt (25) radial überragende Rastnase (32) aufweisen, durch die der Grundkörper (11) gegen eine Bewegung in senkrechter Richtung zur Öffnungsebene (ÖE) festgelegt ist.

9. Zungenverbindung nach Anspruch 4, **dadurch gekennzeichnet, daß** an den vier federnd ausgebildete Zungen (24) jeweils eine in Richtung der Mittelachse (MG) des ringförmigen Grundkörpers (11) nach innen gerichtete Montagelasche (33) angeformt ist.

10. Zungenverbindung nach Anspruch 1, **dadurch gekennzeichnet, daß** in einem ringförmigen Grundkörper (11) ein um eine etwa senkrecht zu der Öffnungsebene (ÖE) verlaufende Drehachse (MG) des Grundkörpers (11) verdrehbarer Drehsockel (14) aufgenommen ist, in dem eine Kugeldüse (18) um eine etwa parallel zu der Öffnungsebene (ÖE) verlaufende Schwenkachse (SD) verschwenkbar aufgenommen ist.

## Claims

1. Tongue connection, in particular for fixing an air vent (10) on a wall (34) in a passenger compartment, on a basic body (11) which is to be arranged in a releasable manner on a border (37) of a wall opening (36) by way of at least two tongues (24) which project from the basic body, the tongues (24) engaging, along the opening border (37), in the wall opening (36) and restricting movement of the basic body (11) in the direction of the opening plane (ÖE), **characterized in that** there is provided on at least one tongue (24) a (radial) protrusion (26) which projects outward in the direction of the opening border (37), cuts into the opening border (37), when the basic body (11) is installed on the wall (34), and prevents movement of the basic body (11) in the opening plane (ÖE) by producing a form fit in relation to the opening border (37).

2. Tongue connection according to Claim 1, **characterized in that** the tongue (24) is designed with the radial protrusion (26) such that the latter can be braced radially with the opening border (37) and fixes the basic body (11) approximately in the direction perpendicular to the opening plane (ÖE).

3. Tongue connection according to Claim 1, **characterized in that** at least one tongue (24) has an additional latching nose (32) by means of which the basic body (11) can be fixed on the wall (34) approximately in the direction perpendicular to the opening plane (ÖE).

4. Tongue connection according to Claim 1, **characterized in that** the basic body (11) is of annular design, and four tongues (24), offset by in each case approximately 90° with respect to one another, are integrally formed on it and are adapted in cross-section on the outside to a wall opening (36) of circular design.

5. Tongue connection according to Claim 4, **characterized in that** the four tongues (24) each have a radial protrusion (26) by means of which the basic body (11) is secured against a rotary movement within the circular wall opening (36).

6. Tongue connection according to Claim 5, **characterized in that** the radial protrusions (26) are integrally formed on a top portion (25) of the tongue (24), running vertically between the respective latching nose (32) and the basic body (11), and are designed in the manner of a cutting edge at least in certain areas.

7. Tongue connection according to Claim 6, **characterized in that** the cutting portion (28) of the respective radial protrusion (26) is of filetooth-like or sawtooth-like design.

8. Tongue connection according to Claim 4, **characterized in that** the four tongues (24) are of resilient design and each has a latching nose (32) which projects radially beyond a top portion (25) located above and by means of which the basic body (11) is secured against a movement in the direction perpendicular to the opening plane (ÖE).

9. Tongue connection according to Claim 4, **characterized in that** in each case one installation lug (33), which is directed inward in the direction of the centre axis (MG) of the annular basic body (11), is integrally formed on the four resilient tongues (24).

10. Tongue connection according to Claim 1, **characterized in that** an annular basic body (11) receives a rotary base (14) which can be rotated about an axis of rotation (MG) of the basic body (11), said axis of rotation running approximately perpendicularly to the opening plane (ÖE), and in which a spherical vent (18) is received such that it can be pivoted about a pivot axis (SD) running approximately parallel to the opening plane (ÖE).

## Revendications

1. Assemblage à languettes, notamment pour immobiliser une buse (10) d'aération sur une paroi (34) dans un habitacle, par un corps (11) de base qui doit être disposé de manière amovible, par au moins deux languettes (24) partant en saillie de ce corps de base, sur un bord (37) d'ouverture d'une ouverture (36) de paroi, les languettes (24) s'engageant le long du bord (37) d'ouverture d ans l'ouverture (36) de paroi et limitant un mouvement du corps (11) de base dans la direction du plan (ÖE) d'ouverture, **caractérisé en ce qu'**une saillie (26) (radiale) faisant saillie vers l'extérieur en d irection du bord (37) d'ouverture est prévue sur au moins une languette (24), saillie qui entaille le bord (37) d'ouverture lors du montage du corps (11) de base sur la paroi (34) et qui, par la réalisation d'un engagement à complémentarité de forme avec le bord (37) d'ouverture, empêche un mouvement du corps (11) de base dans le plan (ÖE) d'ouverture.

2. Assemblage à languettes suivant la revendication 1, **caractérisé en ce que** la languette (24) est pourvue de la saillie (26) radiale de telle sorte que cette dernière peut être serrée radialement par le bord (37) d'ouverture et immobilise le corps (11) de base en direction approximativement perpendiculaire au plan (ÖE) d'ouverture.

3. Assemblage à languettes suivant la revendication 1, **caractérisé en ce qu'**au moins une languette (24) comporte un bec (32) d'encliquetage supplémentaire, par lequel le corps (11) de base peut être immobilisé sur la paroi (34) en direction approximativement perpendiculaire au plan (ÖE) d'ouverture.

4. Assemblage à languettes suivant la revendication 1, **caractérisé en ce que** le corps (11) de base est réalisé annulaire, et quatre languettes (24) respectivement décalées de 90° les unes par rapport aux autres sont formées sur lui et sont adaptées extérieurement par leur section à une ouverture (36) de paroi réalisée de forme circulaire.

5. Assemblage à languettes suivant la revendication 4, **caractérisé en ce que** les quatre languettes (24) comportent chacune une saillie (26) radiale, par laquelle le corps (11) de base est immobilisé à l'encontre d'un mouvement de rotation à l'intérieur de l'ouverture (36) de paroi circulaire.

6. Assemblage à languettes suivant la revendication 5, **caractérisé en ce que** les saillies (26) radiales sont formées sur une partie (25) supérieure de la languette (24) en s'étendant verticalement entre le bec (32) d'encliquetage respectif et le corps (11) de base, et sont réalisées au moins sectoriellement à la manière d'un tranchant.

7. Assemblage à languettes suivant la revendication 6, **caractérisé en ce que** la partie (28) coupante de la saillie (26) radiale respective est réalisée en dent de lime ou de scie.

8. Assemblage à languettes suivant la revendication 4, **caractérisé en ce que** les quatre languettes (24) sont réalisées élastiques et comportent chacune un bec (32) d'encliquetage dépassant radialement d'une partie (25) supérieure qui se trouve au-dessus de lui, bec par lequel le corps (11) de base est empêché de se déplacer en direction perpendiculaire au plan (ÖE) d'ouverture.

9. Assemblage à languettes suivant la revendication 4, **caractérisé en ce qu'**une patte (33) de montage, dirigée vers l'intérieur en direction de l'axe (MG) médian du corps (11) de base annulaire, est formée sur chacune des quatre languettes (24) réalisées élastiques.

10. Assemblage à languettes suivant la revendication 1, **caractérisé en ce qu'**un socle (14) rotatif, pouvant tourner autour d'un axe (MG) de rotation du corps (11) de base qui s'étend environ perpendiculairement au plan (ÖE) d'ouverture, est reçu dans un corps (11) de base annulaire, socle dans lequel est reçue une buse (18) sphérique pouvant pivoter autour d'un axe (SD) de pivotement s'étendant environ parallèlement au plan (ÖE) d'ouverture.
